# EUROPÄISCHE PATENTANMELDUNG

(11) **EP 1 098 205 A2**
(43) Veröffentlichungstag der Anmeldung: **09.05.2001**
(21) Anmeldenummer: 00124078.7
(22) Anmeldetag: 06.11.2000
(51) Int. Cl.: G01S 5/02

(54) **Verfahren und Vorrichtung zur Ortung von Sachwerten mittels eines Ortungsmoduls**

(30) Priorität: 06.11.1999 DE 29919554 U; 05.05.2000 DE 20008009 U
(71) Anmelder: Weegen, Jürgen, 48291 Telgte (DE)
(72) Erfinder: Weegen, Jürgen, D-48291 Telgte (DE)
(74) Vertreter: Habbel, Hans-Georg, Dipl.-Ing.

(57) **Zusammenfassung**

Die Erfindung bezieht sich auf ein Verfahren zur Ortung von Sachwerten, z. B. Diebesgut mit einem im Diebesgut vorhandenen Ortungsmodul, das im Bedarfsfall die momentane Lage des Diebesgutes feststellt und an einen entsprechenden Empfänger sendet, wobei die Feststellung der Lage des Ortungsmoduls mittels der Ermittlung von Daten des Mobilfunknetzes und durch Senden der so erhaltenen Ortsdaten an einen geeigneten Empfänger vorgesehen ist.

## Beschreibung

Die Erfindung betrifft ein Verfahren zur Ortung von Sachwerten mittels eines in den Sachwerten versteckten bzw. angeordneten Ortungsmoduls und die entsprechende Vorrichtung hierzu.

Um nach einem Diebstahl Diebe leichter auffinden zu können, ist es bekannt, z. B. in einer Attrappe eines Geldscheinbündels eine Farbpatrone anzuordnen, die beim Auslösen eines Kontaktes oder Senders, d. h. wenn ein Dieb unbefugterweise die Geldscheinbündelattrappe entwendet, sich öffnet bzw. zerplatzt. Die Farbe tritt in diesem Fall aus der Geldscheinbündelattrappe aus und färbt zum einen weiteres, ebenfalls entwendetes Geld in der entsprechenden Farbe ein und macht dieses unbrauchbar und darüber hinaus, wenn der Dieb die gefärbten Geldscheine mit den Händen berührt, werden ebenfalls die Hände des Diebes eingefärbt und ermöglichen anschließend eine Identifikation des Täters.

Diese Technik hat sich insofern bewährt, als das viele entwendete Geldscheine durch die Farbe anschließend für den Räuber unbrauchbar gemacht wurden.

Jedoch hat dieser Stand der Technik nur in unbefriedigender Weise dazu geführt, daß die Räuber auch anschließend gefaßt wurden, da eine Identifizierung des Räubers nur dann möglich ist, wenn - mehr oder weniger durch Zufall - der Räuber von der Polizei auf entsprechende Farbflecken untersucht wurde.

Weitere Nachteile dieses Standes der Technik sind, daß bei einer Fehlauslösung innerhalb eines Gebäudes hohe Sachbeschädigungen vorkommen können, z. B. durch Beflecken von Mobiliar, Teppichböden u. dgl.

Um insbesondere ein Auffinden eines geflüchteten Diebes zu erleichtern, der Diebesgut entwendet hat, ist aus dem gattungsbildenden Gebrauchsmuster DE 296 14 823 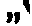 Ortungsvorrichtung" bekannt, eine Geldscheinbündelattrappe, Geldkoffer, Geldsäcke od. dgl. mit einer Ortungsvorrichtung auszustatten, die mit einem GPS-Empfänger ausgestattet ist (GPS = Global Positioning System). Mit dieser Ortungsvorrichtung kann auch in entlegenen Gebieten das entwendete Diebesgut mitsamt dem Dieb ermittelt werden, wenn es möglich ist, über den GPS-Empfänger dieser Ortungsvorrichtung die entsprechenden Ortsdaten zu erhalten und anschließend an eine Empfangsstation weiterzuleiten.

Ein gravierender Nachteil dieser Technik ist, daß nicht immer eine Funkverbindung zwischen dem GPS-Satelliten und der GPS-Einheit der Ortungsvorrichtung besteht. Es muß eine direkte Funkverbindung zwischen der Ortungsvorrichtung und den GPS-Satelliten bestehen und daher muß der GPS-Empfänger immer unter freiem Himmel betrieben werden. Eine GPS-Ortung ist nur dann ausführbar, wenn mindestens drei Satellitensignale sauber empfangen werden. Mit anderen Worten ausgedrückt, funktioniert die Ortung über den aus dem Stand der Technik bekannten GPS-Empfänger der Ortungseinheit nicht, wenn sich die Ortungsvorrichtung und das damit zusammenhängende Diebesgut in geschlossenen Räumen, Fahrzeugen od. dgl. befindet, d. h. überall dort, wo die GPS-Ortungsvorrichtung keinen direkten 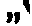 Blickkontakt" zu den GPS-Satelliten besitzt. Hieraus resultiert also nur eine deutlich eingeschränkte Anwendbarkeit und Brauchbarkeit des bekannten GPS-Ortungsverfahrens. Zudem ist das GPS-Ortungsverfahren leicht manipulierbar.

Der Erfindung liegt die Aufgabe zugrunde, ein Verfahren und eine Vorrichtung hierfür zu schaffen, daß die Ortung eines Ortungsmoduls, das z. B. in einem Geldbehälter, Safe od. dgl. angeordnet ist, auch unter schlechten Übertragungsbedingungen ermöglicht, d. h. zum Beispiel auch innerhalb von geschlossenen Räumen, Fahrzeugen oder aber, wenn sich das Ortungsmodul in einem Koffer oder sonstigen Behältnis befindet.

Diese der Erfindung zugrundeliegende Aufgabe wird durch ein Verfahren entsprechend des kennzeichnenden Teiles des Anspruches 1 gelöst.

Mit anderen Worten ausgedrückt wird ein Ortungsverfahren vorgeschlagen, wobei die Feststellung der geographischen Lage des Ortungsmoduls, das dem Diebesgut beigefügt ist bzw. in diesen versteckt ist, über das Mobilfunknetz erfolgt und durch anschließendes Senden der eingeholten geographischen Informationen an einen entsprechenden Empfänger, wie beispielsweise Polizeistation od. dgl. Eine vorteilhafte Ortung wird z. B. erreicht, wenn Daten benachbarter Funkzellen des Mobilfunkbetreibers gesammelt werden, die dann die Ortung des Ortungsmoduls ermöglichen.

Vorteilhafte Ausgestaltungen dieses Verfahrens sind in den Unteransprüchen 2 bis 8 beschrieben.

In vorteilhafter Ausgestaltung wird bei der Aktivierung der Ortungsvorrichtung ein Voicecall zum zuständigen Callcenter aufgebaut. Das Callcenter kann dann entsprechende Behörden, wie Polizei od. dgl. informieren oder sonstige Maßnahmen veran-Lassen, um die Ergreifung der Täter zu ermöglichen.

In vorteilhafter Ausgestaltung des Verfahrens werden die Informationen hinsichtlich der momentanen Ortsposition als SMS-Nachricht durch die Sendeeinheit des Ortungsmoduls versandt.
In vorteilhafter Ausgestaltung werden die festgestellten Daten der momentanen Lage an einen Location Server gesandt, der die eingehenden Daten abgleicht in die aktuelle Position im Mobilfunknetz.

In vorteilhafter Ausgestaltung des erfindungsgemäßen Verfahrens werden die ermittelten Daten der momentanen Lage des Ortungsmoduls im Mobilfunknetz vom Location Server in GPS-Coordinaten umgerechnet.

In vorteilhafter Ausgestaltung werden anschließend diese erhaltenen GPS-Coordinaten auf ein topographisches Kartenwerk übertragen.

Die Aktivierung der Lokalisationsvorrichtung kann zum einen durch einen extern abgegebenen und vom Ortungsmodul empfangenen Befehl erfolgen; eine weitere Möglichkeit der Aktivierung liegt in der ständigen, d. h. in der wiederholten Feststellung der aktuellen Lage durch das Ortungsmodul, und sollte die vorher definierte Position des Ortungsmoduls verlassen worden sein, erfolgt eine automatische Aktivierung des Ortungsmoduls, d. h. eine automatische Feststellung der momentanen geographischen Lage und eine entsprechende Weitersendung dieser Information an einen entsprechenden Empfänger.

Die erfindungsgemäße Aufgabe wird zudem durch eine Vorrichtung entsprechend des Anspruches 9 gelöst.

Mit anderen Worten ausgedrückt wird vorgeschlagen, daß ein Ortungsmodul als Lokalisierungsvorrichtung eine Mobilfunkeinheit aufweist zugunsten einer Ermittlung der Position des Ortungsmoduls mittels des Mobilfunknetzes. Zusätzlich wird die ermittelte Ortsposition an einen geeigneten Empfänger gesandt.

Vorteilhafte Ausgestaltungen dieser Vorrichtung sind in den Unteransprüchen 10 bis 12 erläutert.

In vorteilhafter Weise ist die als Mobilfunkeinheit ausgebildete Lokalisierungsvorrichtung sowohl Sende- als auch Empfangseinheit, um mit lediglich einem Modul diese beiden Funktionen 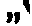 senden" und 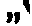 empfangen" durchführen zu können.

In vorteilhafter Weise ist das Ortungsmodul mit mindestens einem Signalgang für externe Beschaltung ausgestattet, um hier eine Aktivierung des Ortungsmoduls zu erreichen, wenn ein entsprechender, als Signal für den Signaleingang codierter Befehl gegeben wird.

In vorteilhafter Ausgestaltung weist das Ortungsmodul ein Mikrophon auf, das Umgebungsgeräusche aufnimmt und bei Bedarf an die Sendeeinrichtung weiterleitet, da auch Umgebungsgeräusche, wie z. B. abgehörte Gespräche, die Ergreifung der Täter vereinfachen können. Die Umgebungsgeräusche können z. B. an ein Callcenter geleitet werden zur dortigen Weiterleitung bzw. weiteren Bearbeitung.

Ein Ausführungsbeispiel der Erfindung ist in der Zeichnung dargestellt, das rein beispielhaft eine mit einer entsprechenden Ortungseinrichtung ausgestattete Geldscheinbündelattrappe darstellt.

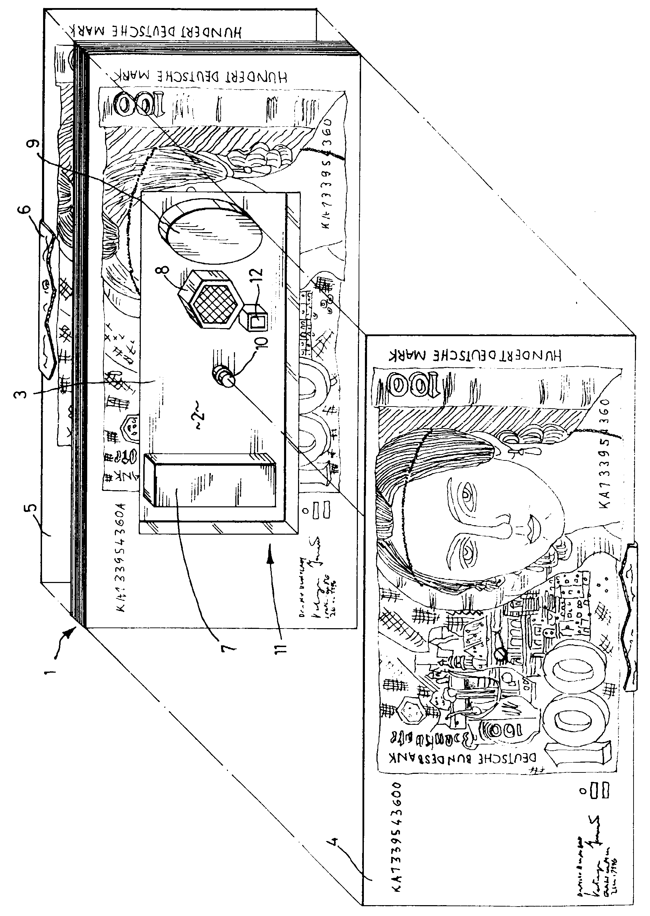

Bezugnehmend auf Fig. 1 ist rein beispielhaft eine Attrappe 1 eines Geldscheinbündels dargestellt, wobei das vorgeschlagene Ortungsmodul nicht nur in entsprechenden Geldscheinbündelattrappen eingearbeitet sein kann, sondern z. B. auch in entsprechende Behälter und Fahrzeuge, die bei Geld- bzw. Wertguttransporten verwendet werden bzw. in Tresore oder Geldautomaten, die nach Entfernen von ihrem Standort z. B. automatisch alarmieren und daraufhin verfolgt werden können. Weitere Anwendungen des vorgeschlagenen Ortungsmoduls sind denkbar, z. B. bei der Überwachung des Standortes von Baumaschinen und sonstigen kostenintensiven Vorrichtungen und eine Alarmierung, sobald der erlaubte Bewegungsradius überschritten wird. Zusätzlich können durch entsprechend eingebaute Ortungsmodule auch Mietwagen überwacht werden zur Kontrolle der erlaubten Fahrstrecken.

Die in Fig. 1 dargestellte Attrappe 1 weist einen Hohlraum 2 auf, der eine Wandung 3 aufweist, auf der die Bauteile der Attrappe 1 angeordnet sind. Der Hohlraum 2 der Attrappe 1 wird abgedeckt durch einen vorderen echten Geldschein 4 und durch einen hinteren echten Geldschein 5, die über eine Banderole 6 mit der Attrappe 1 verbunden sind.

Auf der Wandung 3 ist eine Energieversorgungseinheit 7 angeordnet, die über nicht dargestellte Verbindungen mit einer GSM-Einheit 8 verbunden ist (GSM: Global System für Mobile Communication), wobei diese GSM-Einheit 8 in vorteilhafter Weise direkt als Sende- und Empfangseinheit ausgebildet ist und hierdurch Kosten spart und zudem platzsparend ausgebildet ist. Die vorgeschlagene GSM-Einheit 8 ist rein beispielhaft genannt. Selbstverständlich umfaßt die Erfindung sämtliche Techniken des Mobilfunkbereiches zur Ortung des Ortungsmoduls, also nicht nur die GSM-Technik, sondern auch UNTS und sonstige. Daher bedeutet die Verwendung des Begriffes GSM nicht eine Beschränkung der Mobilfunkeinheit des Ortungsmoduls auf die GSM-Technik. Mit 9 ist ein Microcontroller mit notwendigem Speicher und I/O Bausteinen bezeichnet. Die Energieversorgungseinheit kann z. B. als Batterie oder wiederaufladbarer Akku ausgebildet sein.

Ein Drucksensor 10 ist ebenfalls vorgesehen und in diesem Ausführungsbeispiel ist dieser Drucksensor 10 als Stift vorgesehen, der sich, in montiertem Zustand der Attrappe, stets in hineingedrückter Stellung befindet, wenn die Attrappe 1 auf diesen Stift gelegt ist. Wenn nun die Attrappe 1 aufgenommen wird, wird der Drucksensor 10 entlastet und kann durch ein Federelement weiter ausfahren und schließt nun einen Kontakt zwischen der Energieversorgungseinheit 7 und der GSM-Einheit 8, so daß anschließend eine Aktivierung der gesamten dargestellten Ortungseinrichtung erfolgt. Es ist auch möglich, das Modul mit einem Kontakt, z. B. einem Reed-Kontakt auszustatten und das Modul mit dem Kontakt auf eine Magnetplatte zu legen. Wenn die Attrappe mit dem Modul aufgenommen wird und der Kontakt nicht mehr an der Magnetplatte anliegt, erfolgt der 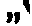 Alarm".

Insgesamt bilden die Versorgungseinheit 7 und die GSM-Einheit 8 ein Ortungsmodul 11, das nicht nur in einer Geldscheinbündelattrappe eingearbeitet sein kann, sondern das auch wie oben angegeben, z. B. in Wertgutbehältern, Geldbomben, Tresoren, Geldtransportfahrzeugen, Bargeldautomaten u. dgl. eingearbeitet sein kann.

In vorteilhafter Ausgestaltung weist das Ortungsmodul 11 ein Mikrofon 12 auf, das im Falle einer Aktivierung des Ortungsmoduls 11 ermöglicht, daß die Umgebungsgeräusche des Ortungsmoduls 11 erfaßt und über das GSM-Modul 8 an einen entsprechenden Empfänger gesandt werden können.

Zur Funktionsweise des vorgeschlagenen Ortungsmoduls 11 folgendes:
Wenn Geldbeträge gestohlen wurden und sich bei dem Diebesgut die dargestellte Geldscheinbündelattrappe 1 mitsamt des Ortungsmoduls 11 gefindet, kann z. B. über einen der nicht dargestellten Schalteingänge des Ortungsmoduls 11 dieses vom Stand-by-Betrieb in den Betriebsmodus geschaltet werden. Umgehend baut das Ortungsmodul 11 einen Voicecall zum zuständigen Callcenter auf, das weitere Maßnahmen einleiten kann und startet danach die Prozedur zur Sammlung von Daten der benachbarten Zellen des Mobilfunknetzes. Zum Beispiel wählt das Modul 11 verschiedene Funkmasten des Mobilfunknetzes an und sendet Informationen dieser verschiedenen Anwählvorgänge an einen entsprechenden Empfänger, der hieraus Informationen zur Lage des Ortungsmoduls 11 ableiten kann. Nach Zusammensetzung des gesamten Datensatzes der Daten der benachbarten Zellen des Mobilfunknetzes wird dieser z. B. als SMS-Botschaft direkt an den Location Server zur weiteren Verarbeitung geschickt. Die oben beschriebene Prozedur kann je nach Netzstruktur z. B. zwischen 20 und 30 Sekunden dauern und kann in vorprogrammierten Abständen wiederholt werden.

Eine andere Aktivierung des Ortungsmoduls ist möglich, wenn dieses über entsprechende Anfragen in regelmäßigen Abständen, z. B. einer Stunde, seine Position bestimmt. Es erfolgt ein Vergleich eines vorgegebenen Datenmusters bzw. einer vorgegebenen Ortposition mit den momentan empfangenen Informationen der aktuellen Zelle des Mobilfunknetzes. Diese Art der Ortung ist relativ ungenau, reicht jedoch zur Überwachung evtl. Veränderungen aus.

Stellt das Ortungsmodul ein Verlassen der vorher definierten Position fest, wird automatisch in den Alarmmoduls umgeschaltet. In diesem Alarmmodus bzw. Betriebsmodus erfolgt die oben beschriebene Prozedur, d. h. es erfolgt das Sammeln von Daten der Zellen bzw. Zellen des Mobilfunknetzes.

Selbstverständlich kann das Aktivieren über den Drucksensor o. a. erfolgen.

Da die vorgeschlagene Ortung mittels Mobilfunktechnologie, z.B. GSM, arbeitet, kann die Ortung auch in geschlossenen Räumen, Fahrzeugen etc. erfolgen, und es muß kein direkter 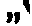 Blickkontakt" zu einem GPS-Satelliten erfolgen, wie dies bei der GPS-Ortung erforderlich ist.

Die von dem Ortungsmodul 11 gesandte Nachricht hinsichtlich der momentanen Ortslage wird in vorteilhafter Ausgestaltung als SMS gesandt, und diese Positionsinformation wird über das Mobilfunknetz an einen Location Server übertragen. Dieser errechnet unter Anwendung spezieller Softwareroutinen und Algorithmen aus den vom Modul eingesammelten Netzumgebungsdaten die aktuelle Position im Mobilfunknetz.

In alle Berechnungen fließen die Zelldaten des jeweiligen Netzbetreibers als wichtige Parameter ein. Somit wird die Genauigkeit der Positionserkennung ganz wesentlich durch die Qualität dieser Informationen bestimmt.

Spezielle Softwareroutinen konvertieren in einem nächsten Schritt die errechneten Werte in das WGS84-Format, welches dem des GPS Standards entspricht.

Die so ermittelten GPS Koordinaten werden über eine X 25 Leitung an den GIS Server übertragen. In diesem Rechner ist das topographische Kartenwerk des betreffenden Landes in zusätzlichem vektorisiertem Straßennetz, Postleitzahl und Hausnummer im Maßstab 1 : 25000 hinterlegt.

Die Positionskoordinaten werden in den entsprechenden Kartenausschnitt eingetragen und in verschiedenen Graphikformaten zur Übertragung angeboten.

Zusätzlich verfügt der GIS Server über alle notwendigen Speicherfunktionen, um für einen bestimmten Ortungsvorgang ein 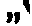 Tracking" des Mobilteils sicherzustellen und auch zur Anzeige zu bringen.

Der vierte Baustein des vorgeschlagenen Gesamtsystems sind die Sicherheitsleitzentralen kommerzieller Betreiber oder der Polizei, bei denen die aktuellen Notrufe über verschiedene Wege auflaufen.

Mit Erscheinen des Alarms bekommt der Operator der Leitzentrale automatisch oder im Fall der Polizei auf Anforderung den zugehörigen Kartenausschnit mit folgenden Informationen auf dem Bildschirm angezeigt:
- Position
- Fahrtrichtung
- zurückgelegte Strecke
- Geschwindigkeit.

Die über das Mikrophon 12 gesandten Informationen über den offenen Sprachkanal können zudem zu benutzt werden, Geräuschinformationen vom Ortungsmodul abzuhören. Auf der Basis dieser Angaben ist der Operator in der Lage, in kürzester Zeit notwendige Maßnahmen zur Kontrolle der Situation einzuleiten.

## Patentansprüche

1. Verfahren zur Ortung von Sachwerten, z. B. Diebesgut, mit einem im Diebesgut vorhandenen Ortungsmodul, das im Bedarfsfall die momentane Lage des Diebesgutes feststellt und an einen entsprechenden Empfänger sendet, gekennzeichnet durch die Feststellung der Lage des Ortungsmoduls (11) mittels der Ermittlung von Daten des Mobilfunknetzes und durch Senden der so erhaltenen Ortsdaten an einen geeigneten Empfänger.

2. Verfahren gemäß Anspruch 1, gekennzeichnet durch den Aufbau eines Voicecalls zum zuständigen Callcenter des Mobilfunkbetreibers.

3. Verfahren gemäß Anspruch 1 oder 2, gekennzeichnet durch das Versenden einer SMS-Nachricht durch die Sendeeinheit mit den Daten der ermittelten momentanen Lage an einen geeigneten Empfänger.

4. Verfahren gemäß einem der vorhergehenden Ansprüche, gekennzeichnet durch die Sendung der Daten der momentanen Lage an einen Location Server, der die eingehenden Daten umrechnet in die aktuelle Position im Mobilfunknetz.

5. Verfahren gemäß einem der vorhergehenden Ansprüche, gekennzeichnet durch die Konvertierung der ermittelten Lage im Mobilfunknetz in GPS Koordinaten.

6. Verfahren gemäß Anspruch 5, gekennzeichnet durch das Übertragen der GPS Koordinaten auf ein topographisches Kartenwerk.

7. Verfahren gemäß einem der vorhergehenden Ansprüche, gekennzeichnet durch die Aktivierung eines Ortungsmoduls (11) durch einen über einen Schalteingang des Ortungsmoduls (11) eingehenden Befehl.

8. Verfahren gemäß einem der vorhergehenden Ansprüche 1 bis 6, gekennzeichnet durch eine wiederholte Abfrage der momentanen Ortslage durch das Ortungsmodul (11) und durch eine Aktivierung desselben, wenn eine vorher definierte Position des Ortungsmoduls (11) verlassen wird.

9. Ortungsmodul zur Anwendung z. B. in einer Geldscheinbündelattrappe, einem Geldbehälter od. dgl. zur Ermittlung und Weiterleitung der aktuellen Position von Diebesgut, mit einer Energieversorgungseinheit sowie einer Lokalisierungsvorrichtung zur Feststellung der momentanen Ortsposition sowie einer Sendevorrichtung zur Weitersendung dieser Ortsposition-Information an einen geeigneten Empfänger, gekennzeichnet durch die Lokalisierungsvorrichtung, die als Mobilfunkeinheit ausgebildet ist zugunsten einer geographischen Ermittlung der Position des Ortungsmoduls (11) mittels ermittelter Daten des Mobilfunknetzes.

10. Ortungsmodul gemäß Anspruch 9, gekennzeichnet durch die Mobilfunkeinheit, die sowohl Sende- als auch Empfangseinheit ist.

11. Ortungsmodul gemäß Anspruch 9 oder 10, gekennzeichnet durch mindestens einen Signaleingang für externe Beschaltung.

12. Ortungsmodul gemäß einem der vorhergehenden Ansprüche 9 bis 11, gekennzeichnet durch ein Mikrophon (12) des Ortungsmoduls (11) zugunsten eines Abhörens der Umgebungsgeräusche des Ortungsmoduls (11).
